# EUROPÄISCHE PATENTSCHRIFT

(11) **EP 2 145 520 B1**
(45) Veröffentlichungstag und Bekanntmachung des Hinweises auf die Patenterteilung: **19.01.2011**
(21) Anmeldenummer: 08012896.0
(22) Anmeldetag: 17.07.2008
(51) Int. Cl.: A01D 34/64

(54) **Aufsitzmäher**
Lawn tractor
Tondeuse autoportée

(43) Veröffentlichungstag der Anmeldung: 20.01.2010
(73) Patentinhaber: Viking GmbH, 6336 Langkampfen-Kufstein (AT)
(72) Erfinder: Zimmermann, Sven, 6323 Bad Häring (AT); Wiedenmann, Gerhart, 89347 Bubesheim (DE); Rausch, Bernhard, 86476 Wattenweiler (DE); Kempfle, Thomas, 89346 Bibertal (DE)
(74) Vertreter: Wasmuth, Rolf

(56) Entgegenhaltungen:
- GB-A- 2 049 386
- US-A- 3 706 186
- US-A- 3 874 150
- US-A- 4 441 306

## Beschreibung

Die Erfindung betrifft einen Aufsitzmäher der im Obergriff des Anspruchs 1 angegebenen Gattung.

Aus der EP 0 144 214 A2 ist ein Aufsitzmäher bekannt, dessen Mähwerk am Rahmen des Aufsitzmähers beweglich gelagert ist und bei dem die Schnitthöhe über am Mähwerk beweglich angeordnete Rollen einstellbar ist. Dadurch kann die Schnitthöhe gegenüber dem Boden sehr genau eingestellt werden. Allerdings ist die Einstellung der Schnitthöhe über die am Mähwerk gelagerten Räder nur für geringe Schnitthöhen geeignet. Die Räder liegen in jeder Stellung des Mähwerks unterhalb des Mähdecks, so dass die Räder beim Überfahren von Bordsteinen oder dgl. mit dem Aufsitzmäher abgerissen werden können.

Die US 3,706,186 zeigt einen Aufsitzmäher, dessen Mähwerk über eine Verstelleinrichtung zwischen einer Transportstellung und einer Betriebsstellung verstellbar ist. Zur Einstellung der Schnitthöhe sind nachlaufend zum Mähwerk am Mähwerk mehrere Rollen angeordnet, deren Höhenlage gegenüber dem Mähwerk einstellbar ist. Die Schnitthöheneinstellung erfolgt ausschließlich über die Rollen.

Der Erfindung liegt die Aufgabe zugrunde, einen Aufsitzmäher der gattungsgemäßen Art zu schaffen, mit dem auf einfache Weise sowohl große als auch kleine Schnitthöhen einstellbar sind.

Diese Aufgabe wird durch einen Aufsitzmäher mit den Merkmalen des Anspruchs 1 gelöst.

Dadurch, dass der Aufsitzmäher eine erste Einstelleinrichtung besitzt, mit der die Lage einer Abstützung relativ zum Mähwerk einstellbar ist und eine zweite Einstelleinrichtung vorgesehen ist, mit der die Lage des Mähwerks relativ zum Rahmen des Aufsitzmähers einstellbar ist, lassen sich sowohl kleine als auch große Schnitthöhen gut einstellen. Die Abstützung ermöglicht eine sehr genaue Einstellung von geringen Schnitthöhen. Dadurch, dass die Abstützung an dem Mähwerk selbst angeordnet ist, wird erreicht, dass das Mähwerk der Bodenkontur sehr genau folgt. Dadurch kann eine Beschädigung der Grasnarbe bei kleinen Hügeln oder dgl. vermieden werden. Die zweite Einstelleinrichtung, mit der die Lage des Mähwerks relativ zum Rahmen des Aufsitzmähers einstellbar ist, ermöglicht eine einfache Einstellung großer Schnitthöhen. Dabei wird die Lage des Mähwerks mitsamt der Abstützung gegenüber dem Rahmen verändert. Bei der Einstellung der Schnitthöhe über die zweite Einstelleinrichtung muss die Abstützung nicht am Boden angeordnet sein, sondern kann von diesem abheben.

Um zu vermeiden, dass die Abstützung beim Überfahren von Bordsteinen oder dgl. abgerissen wird, ist vorgesehen, dass die Abstützung eine Transportstellung besitzt, in der die Abstützung vollständig auf der dem Boden abgewandten Seite des dem Boden zugewandten unteren Rands des Mähwerks angeordnet ist. Die Abstützung ist dadurch oberhalb des unteren Rands des Mähdecks angeordnet, so dass ein Kontakt der Abstützung mit Bodenunebenheiten wie Bordsteinen oder dgl. sicher vermieden ist. Zusätzlich kann auch die zweite Einstellungseinrichtung auf die höchste Schnitthöhe eingestellt werden, um einen Kontakt des Mähwerks mit dem Boden zu vermeiden.

Vorteilhaft wird die Abstützung in Abhängigkeit der Stellung der zweiten Einstelleinrichtung in die Transportstellung überführt. Es ist demnach eine Zwangssteuerung für die Überführung der Abstützung in die Transportstellung vorgesehen. Dadurch wird die Bedienung vereinfacht, da der Bediener nicht vergessen kann, die Abstützung in die Transportstellung zu überführen.

Vorteilhaft ist das Mähwerk mit dem Rahmen über die zweite Einstelleinrichtung nur in Wirkrichtung zum Anheben des Mähwerks gekoppelt. Das Absenken des Mähdecks erfolgt vorteilhaft aufgrund der Schwerkraft. Dadurch kann die erste Einstelleinrichtung die Position des Mähdecks verändern und das Mähwerk entgegen der Wirkrichtung der Schwerkraft anheben, ohne dass die zweite Einstelleinrichtung betätigt werden muss. Dadurch wird eine einfache Betätigung der Schnitthöheneinstellung erreicht. Umbaumaßnahmen am Aufsitzmäher zum Wechsel zwischen der ersten und der zweiten Einstelleinrichtung können entfallen. Eine einfache konstruktive Gestaltung ergibt sich, wenn das Mähwerk mit dem Rahmen über einen Bowdenzug, einen Seilzug oder eine vorteilhaft nur in eine Richtung wirkende Stange gekoppelt ist.

Vorteilhaft ist die Abstützung eine Konturfolgerolle, die sich über mindestens 50 %, insbesondere über mehr als 80 % der Gesamtbreite des Mähwerks erstreckt. Dadurch kann die Kontur des Bodens über annähernd die gesamte Breite des Mähwerks erfasst und zur Einstellung der Schnitthöhe genutzt werden. Die Konturfolgerolle besitzt vorteilhaft mindestens eine Trägereinheit, die mit mindestens einem Rollenelement, das den Außendurchmesser der Konturfolgerolle bildet, bestückt ist. Es können vorteilhaft mehrere Trägereinheiten und/oder mehrere Rollenelemente vorgesehen sein. Die Konturfolgerolle kann jedoch zweckmäßig auch eine lange, vergleichsweise dünne Rolle sein. Vorteilhaft beträgt der Durchmesser der Konturfolgerolle weniger als 10 % der Länge der Konturfolgerolle. Im Betrieb wälzt die Konturfolgerolle auf dem Rasen ab. Dabei wird die Konturfolgerolle vorteilhaft hinter dem Mähdeck geführt, so dass die Konturfolgerolle über bereits gemähtes Gras abwälzt. Vorteilhaft weist die Konturfolgerolle eine geschlossene Umfangsfläche auf. Die geschlossene Umfangsfläche bewirkt, dass alle Grashalme, die von der Konturfolgerolle überfahren werden, in die gleiche Richtung umgeknickt werden. Beim Hin- und Herfahren des Aufsitzmähers entsteht so ein ästhetisch ansprechendes Streifenmuster im Rasen.

Vorteilhaft ist die erste Einstelleinrichtung eine mechanische Einrichtung. Die erste Einstelleinrichtung umfasst insbesondere ein Hebelsystem zur Einstellung der Schnitthöhe. Vorteilhaft weist das Hebelsystem einen Betätigungshebel zur Einstellung der Transportstellung auf, der unabhängig von der Schnitthöheneinstellung der ersten Einstelleinrichtung betätigt werden kann. Dadurch kann die Abstützung in jeder Stellung der ersten Einstelleinrichtung in die Transportstellung überführt werden. Vorteilhaft wirkt der Betätigungshebel in einer konstruktiv vorgesehenen Position des Mähdecks mit einer Betätigung zusammen, die am Rahmen des Aufsitzmähers angeordnet ist und die die Abstützung in die Transportstellung verstellt. Dadurch ergibt sich eine einfache konstruktive Gestaltung und ein zwangsweises Verstellen der Abstützung in die Transportstellung in einer vorgegebenen Position des Mähdecks, insbesondere, wenn das Mähdeck selbst in seine höchste Position, die insbesondere ebenfalls eine Transportstellung darstellt, überführt wird.

Es kann jedoch auch vorteilhaft sein, dass die erste Einstelleinrichtung eine elektrische Einrichtung ist. Über eine elektrische Einrichtung lässt sich sowohl eine stufenlose Einstellung der Schnitthöhe als auch eine Einstellung der Schnitthöhe in vorgegebenen Stufen auf einfache Weise erreichen. Für den Bediener ist die elektrische Einrichtung ergonomisch, da er die Kraft zum Anheben des Mähdecks nicht selbst aufbringen muss. Eine elektrische Einrichtung erlaubt außerdem eine genaue Einstellung der Schnitthöhe. Vorteilhaft umfasst die erste Einstelleinrichtung einen elektrisch betätigten Zylinder. Um die vom Bediener gewünschte Schnitthöhe einstellen zu können, ist vorgesehen, dass die erste Einstelleinrichtung eine Steuerung umfasst. Um auf einfache Weise die eingestellte Schnitthöhe ermitteln zu können, ist vorgesehen, dass die erste Einstelleinrichtung die eingestellte Schnitthöhe vorteilhaft anhand der Verstellzeit des Zylinders erfasst. Es kann jedoch zweckmäßig auch vorgesehen sein, dass die erste Einstelleinrichtung die eingestellte Schnitthöhe über einen Positionsgeber, beispielsweise ein Potentiometer oder dgl., erfasst.

Um sicherzustellen, dass die Abstützung während des Verstellvorgangs tatsächlich auf dem Boden aufliegt und dass die Abstützung nicht in einer Stellung vom Bediener vergessen wird, in der sie beim Überfahren von Hindernissen abgerissen werden kann, ist vorgesehen, dass die erste Einstelleinrichtung nur in einer Endstellung der zweiten Einstelleinrichtung betätigt werden kann und dass die Abstützung in allen anderen Stellungen der zweiten Einstelleinrichtung in Transportstellung steht. Die Abstützung wird demnach automatisch in die Transportstellung überführt, wenn der Bediener die zweite Einstelleinrichtung aus der Endstellung in eine andere Stellung überführt. Die Endstellung ist dabei insbesondere die niedrigste Schnitthöhe. Die erste Einstelleinrichtung kann dann ausgehend von der niedrigsten Schnitthöhe das Mähdeck anheben, um so die gewünschte Schnitthöhe einzustellen. Eine einfache konstruktive Gestaltung ergibt sich, wenn die zweite Einstelleinrichtung in ihrer Endstellung einen Schalter betätigt, der die erste Einstelleinrichtung freigibt.

Die Verstellung der Abstützung in die Transportstellung erfolgt vorteilhaft elektrisch, insbesondere, wenn die erste Einstelleinrichtung eine elektrische Einrichtung ist.

Die zweite Einstelleinrichtung ist insbesondere eine mechanische Einrichtung. Vorteilhaft ist das Mähwerk an dem Rahmen über mindestens ein Schwenklager schwenkbar gelagert, das mindestens einen Hebel umfasst, wobei die zweite Einstelleinrichtung an dem Hebel des Schwenklagers angreift. Durch die Lagerung des Mähdecks an dem Rahmen über durch Hebel gebildete Schwenklager ergibt sich eine einfache und robuste konstruktive Gestaltung. Über die Schwenklager können vergleichsweise große Verstellwege auf einfache Weise realisiert werden. Die Aufhängung des Mähwerks über Schwenklager ist außerdem verschmutzungsunempfindlich.

Vorteilhaft weist die zweite Einstelleinrichtung Rasten zur Einstellung der Schnitthöhe in vorgegebenen Stufen auf. Die Rasten tragen dabei vorteilhaft eine Beschriftung, die dem Bediener die eingestellte Schnitthöhe anzeigt.

Vorteilhaft sind die erste Einstelleinrichtung und die zweite Einstelleinrichtung zur Einstellung von unterschiedlichen Schnitthöhen vorgesehen. Insbesondere ist die erste Einstelleinrichtung zur Einstellung von Schnitthöhen von etwa 30 mm bis etwa 60 mm ausgelegt und die zweite Einstelleinrichtung zur Einstellung von Schnitthöhen von etwa 30 mm bis zu einer maximalen Schnitthöhe, beispielsweise bis etwa 110 mm. Mit der zweiten Einstelleinrichtung können dabei insbesondere Schnitthöhen im gesamten Verstellbereich eingestellt werden, während mit der ersten Einstelleinrichtung eine Feineinstellung von geringen Schnitthöhen möglich ist.

Ausführungsbeispiele der Erfindung werden im Folgenden anhand der Zeichnung erläutert. Es zeigen:
- Fig. 1: eine schematische Darstellung eines Aufsitzmähers,
- Fig. 2: eine schematische Darstellung der Räder, der Konturfolgerolle und des Mähwerks des Aufsitzmähers aus Fig. 1,
- Fig. 3: die Einstelleinrichtungen des Aufsitz- mähers aus Fig. 1 in einer weiteren Stellung,
- Fig. 4: das Hebelsystem der ersten Einstellein- richtung aus Fig. 3 in vergrößerter Darstellung,
- Fig. 5 und Fig. 6: schematische Darstellungen der Ein- stelleinrichtungen des Aufsitzmähers aus Fig. 1 in weiteren Stellungen,
- Fig. 7 bis Fig. 9: eine Seitenansicht der ersten Einstell- einrichtung in unterschiedlichen Posi- tionen,
- Fig. 10: eine schematische Darstellung eines Ausführungsbeispiels für die Einstell- einrichtungen eines Aufsitzmähers,
- Fig. 11: die erste Einstelleinrichtung des Auf- sitzmähers aus Fig. 10 in vergrößerter, schematischer Darstellung,
- Fig. 12 und 13: schematische Darstellungen des Aufsitz- mähers aus Fig. 10 in weiteren Positionen der Einstelleinrichtungen.

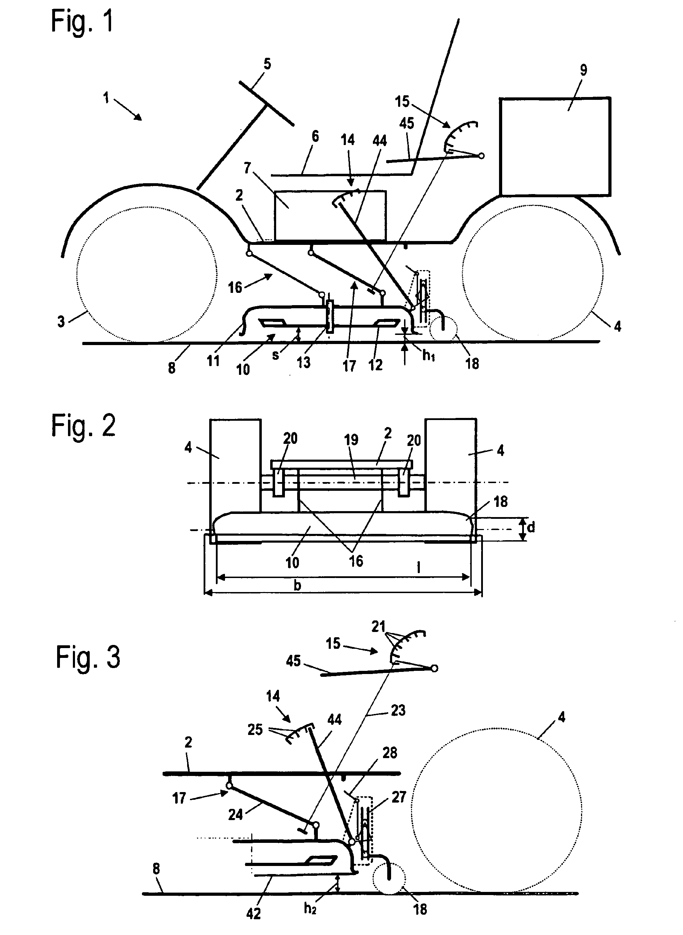

Der in Fig. 1 schematisch gezeigte Aufsitzmäher 1 besitzt einen Rahmen 2, der sich über zwei Vorderräder 3 und zwei Hinterräder 4 auf dem Boden 8 abstützt. An dem Rahmen 2 ist ein Sitz 6 für den Fahrer festgelegt. Zum Steuern des Aufsitzmähers 1 ist ein Lenkrad 5 vorgesehen. Der Aufsitzmäher 1 besitzt einen Antriebsmotor 7, der ein oder mehrere Räder 3, 4 zur Fortbewegung des Aufsitzmähers 1 rotierend antreibt. Der Antriebsmotor 7 treibt außerdem mindestens ein Messer 12 eines Mähwerks 10 an. Zum Antrieb des Messers 12 ist eine Antriebswelle 13 vorgesehen, die eine Haube 11 des Mähwerks 10 durchragt. Der Antrieb des Messers 12 durch den Antriebsmotor 7 kann beispielsweise über einen Riementrieb erfolgen. Zur Aufnahme von Schnittgut, wie geschnittenem Gras oder dgl. besitzt der Aufsitzmäher 1 einen Grasfangbehälter 9, der am Rahmen 2 des Aufsitzmähers 1 vorteilhaft abnehmbar gehalten ist. Der Grasfangbehälter 9 ist mit dem Mähwerk 10 über einen in Fig. 1 nicht gezeigten Führungskanal verbunden.

Das Mähwerk 10 ist am Rahmen 2 über vordere Schwenklager 16 und hintere Schwenklager 17 höhenverstellbar gehalten. Zur Einstellung der Schnitthöhe s weist der Aufsitzmäher 1 eine erste Einstelleinrichtung 14 und eine zweite Einstelleinrichtung 15 auf. Die Schnitthöhe s entspricht dabei dem Abstand des Messers 12 vom Boden 8. Die zweite Einstelleinrichtung 15 dient zur Einstellung von Schnitthöhen s von etwa 30 mm bis zu einer maximalen Schnitthöhe, die im Ausführungsbeispiel etwa 110 mm beträgt, also für vergleichsweise große Verstellbereiche. Die erste Einstelleinrichtung 14 umfasst eine Konturfolgerolle 18, die sich auf dem Boden 8 abstützt und die an der Haube 11 des Mähwerks 10 über ein im Folgenden noch näher beschriebenes Hebelsystem gelagert ist. Die erste Einstelleinrichtung 14 ist über einen Bedienhebel 44 zu bedienen und die zweite Einstelleinrichtung 15 über einen zweiten Bedienhebel 45. Beide Bedienhebel 44, 45 ragen in den Bereich des Sitzes 6, so dass sie vom Bediener im Betrieb leicht betätigt werden können.

Wie die schematische Ansicht in Fig. 2 zeigt, erstreckt sich die Konturfolgerolle 18 über etwa die gesamte Breite b des Mähwerks 10. Die Konturfolgerolle 18 besitzt eine Länge 1, die sich über mindestens 50 %, insbesondere über mehr als 80 % der Gesamtbreite b des Mähwerks 10 erstreckt. Der Durchmesser d der Konturfolgerolle 18 beträgt vorteilhaft weniger als 10 % der Länge 1 der Konturfolgerolle 18. Die Konturfolgerolle 18 besitzt eine oder mehrere Trägereinheiten, an der ein oder mehrere Rollenelemente vorteilhaft drehbar angeordnet sind, mit denen die Konturfolgerolle 18 auf dem Boden 8 aufliegt. Die Konturfolgerolle kann jedoch auch als lange, dünne Rolle ausgeführt sein. Die erste Einstelleinrichtung 14 dient zur Einstellung von geringen Schnitthöhen s von etwa 30 mm bis etwa 60 mm.

Wie Fig. 2 zeigt, sind die beiden Hinterräder 4 auf einer Achse 19 gelagert, die über Lager 20 am Rahmen 2 gehalten ist. Der Rahmen 2 ist über zwei in Fig. 2 schematisch gezeigte Schwenklager 16 mit dem Mähwerk 10 verbunden. Vorteilhaft sind auch zwei Schwenklager 17 vorgesehen, die bezogen auf die Fahrtrichtung des Aufsitzmähers 1 nebeneinander angeordnet sind.

In dem in Fig. 1 gezeigten Zustand befindet sich die zweite Einstelleinrichtung 15 in der untersten Schnitthöhenposition. Auch die erste Einstellrichtung 14 ist in der untersten Schnittposition angeordnet. Die Haube 11 besitzt zum Boden 8 einen Abstand h₁, der der minimalen Schnitthöhe s zugeordnet ist.

In Fig. 3 ist der Aufsitzmäher 1 mit einer anderen Schnitthöheneinstellung gezeigt. Die zweite Einstelleinrichtung 15 ist weiterhin in der untersten Schnitthöheneinstellung angeordnet. Wie Fig. 3 zeigt, besitzt die zweite Einstelleinrichtung 15 eine Vielzahl von Rasten 21, die jeweils eine konstruktiv vorgegebene Schnitthöhe s festlegen. Vorteilhaft sind die Rasten 21 beschriftet, so dass der Bediener leicht die gewünschte Schnitthöhe s einstellen kann. Die erste Einstelleinrichtung 14 besitzt Rasten 25, die ebenfalls die stufenweise Einstellung unterschiedlicher Schnitthöhen ermöglichen. Auch die Rasten 25 sind vorteilhaft beschriftet.

In Fig. 3 ist die erste Einstelleinrichtung 14 in der höchsten Schnitthöhe gezeigt. Der untere Rand 42 der Haube 11 besitzt zum Boden 8 in dieser Stellung einen Abstand h₂, der größer als der Abstand h₁ ist. Der Abstand h₁ kann etwa 30 mm und der Abstand h₂ beispielsweise etwa 60 mm betragen. Der Bedienhebel 45 der zweiten Einstelleinrichtung 15 ist im Ausführungsbeispiel über einen Bowdenzug 23 mit einem Hebel 24 des Schwenklagers 17 verbunden. Über den Bowdenzug 23 kann das Mähwerk 10 durch Verschwenken des Hebels 24 angehoben werden. In der in Fig. 3 gezeigten Stellung ist der Bowdenzug 23 an dem Hebel 24 lose gehalten. Das Mähwerk 10 wird entgegen der Wirkrichtung der Schwerkraft von der Konturfolgerolle 18 angehoben. Anstatt des Bowdenzugs 23 kann auch ein starrer Stab oder ein Seilzug vorgesehen sein, an dem der Hebel 24 abhebbar gehalten ist.

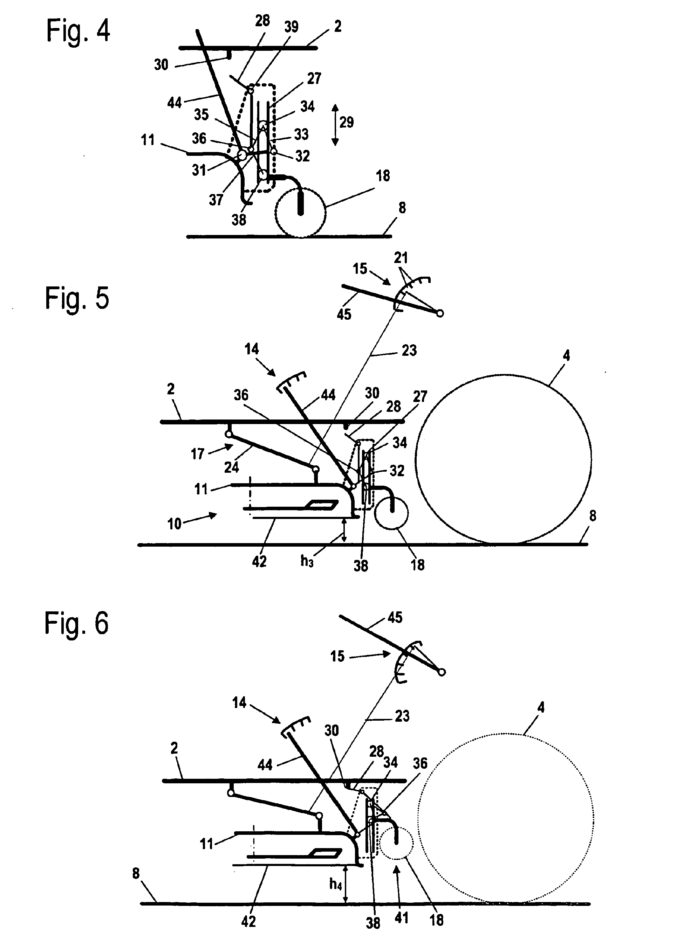

Der Aufbau des Hebelsystems, mit dem der Bedienhebel 44 mit der Konturfolgerolle 18 verbunden ist, wird im Folgenden anhand der schematischen Darstellung in Fig. 4 erläutert.

Wie Fig. 4 zeigt, ist der Bedienhebel 44 L-förmig ausgebildet und an einem Lager 31 schwenkbar an der Haube 11 des Mähwerks 10 gelagert. Der lange Schenkel des Bedienhebels 44 ragt in den Bereich des Sitzes 6 des Bedieners. Am kurzen Schenkel des Bedienhebels 44 ist an einem ersten Gelenk 32 ein erster Koppelhebel 33 angeordnet. Der erste Koppelhebel 33 ist an einem zweiten Gelenk 34 mit einem zweiten Koppelhebel 35 verbunden. Das zweite Gelenk 34 ist in einer Führung 27 linear geführt. Die Führung 27 lässt eine Bewegung des zweiten Gelenks 34 nur in Richtung des Doppelpfeils 29 zu. Dies entspricht in üblicher Arbeitsposition des Aufsitzmähers 1 bei ebenem Boden 8 der Wirkrichtung der Schwerkraft, also der senkrechten Richtung. Der zweite Koppelhebel 35 ist über ein drittes Gelenk 36 mit einem dritten Koppelhebel 37 verbunden. Das dritte Gelenk 36 ist an einem Betätigungshebel 28 parallel zur Führung 27 geführt. In der in Fig. 4 gezeigten Stellung ergibt sich dadurch eine starre Kopplung zwischen dem zweiten Gelenk 34 und einem am dritten Koppelhebel 37 angeordneten vierten Gelenk 38. Am vierten Gelenk 38 ist die Konturfolgerolle 18 festgelegt. Der Betätigungshebel 28 ist an einem Lager 39 schwenkbar gelagert, das an der Schutzhaube 11 angeordnet ist (Fig. 4 und Fig. 7 bis 9).

Der Betätigungshebel 28 besitzt einen nach oben ragenden Abschnitt, der in Richtung auf eine am Rahmen 2 angeordnete Betätigung 30 ragt. In der in Fig. 4 gezeigten untersten Position der zweiten Einstelleinrichtung 15 besitzt der Betätigungshebel 28 zu der Betätigung 30 einen Abstand.

In Fig. 5 ist eine dritte, größere Schnitthöheneinstellung des Mähwerks 10 gezeigt. Die Einstellung erfolgt über die zweite Einstelleinrichtung 15, die in Fig. 5 in einer mittleren Rast 21 eingerastet ist. In der in Fig. 5 gezeigten Stellung ist die erste Einstelleinrichtung 14 in der untersten Einstellposition gezeigt. Das zweite Gelenk 34 befindet sich am oberen Ende der Führung 27. Die gezeigte Schnitthöhe kann jedoch auch in jeder anderen Position der ersten Einstelleinrichtung 14 angefahren werden. In der in Fig. 5 gezeigten Stellung besitzt der dem Boden 8 zugewandte untere Rand 42 der Haube 11 zum Boden 8 einen Abstand h₃, der größer als der in Fig. 3 gezeigte Abstand h₂ ist. Der Betätigungshebel 28 besitzt zur Betätigung 30 einen Abstand, der kleiner als in der in Fig. 4 gezeigten Stellung ist.

In Fig. 6 ist die zweite Einstellrichtung 15 in der Einstellung für die höchste Schnitthöhe gezeigt. Der untere Rand 42 der Haube 11 besitzt einen Abstand h₄ zum Boden 8, der beispielsweise etwa 110 mm betragen kann. In dieser Stellung ist der Betätigungshebel 28 von der Betätigung 30 des Rahmens 2 betätigt. Die Betätigung 30 bewirkt ein Verschwenken des Betätigungshebels 28. Dabei wird auch das dritte Gelenk 36 verschwenkt. Dadurch wird der Abstand zwischen dem zweiten Gelenk 34 und dem vierten Gelenk 38 verkürzt. Das zweite Gelenk 34 bleibt in der durch den Bedienhebel 44 vorgegebenen Stellung, während die Konturfolgerolle 18 nach oben verstellt wird. Die Hebel des Hebelsystems sind dabei so ausgelegt, dass die Konturfolgerolle 18 oberhalb der Ebene des unteren Rands 42 der Haube 11 angeordnet ist. Die Konturfolgerolle 18 befindet sich in ihrer Transportstellung 41.

Wird das Mähwerk 10 aus der in Fig. 6 gezeigten Stellung über die zweite Einstelleinrichtung 15 abgesenkt, so bleibt die Einstellung der ersten Einstelleinrichtung 14 erhalten. Der Betätigungshebel 28 löst sich von der Betätigung 30 und schwenkt zurück, so dass die Konturfolgerolle 18 in die zuvor eingestellte Schnitthöhenposition zurückgestellt wird.

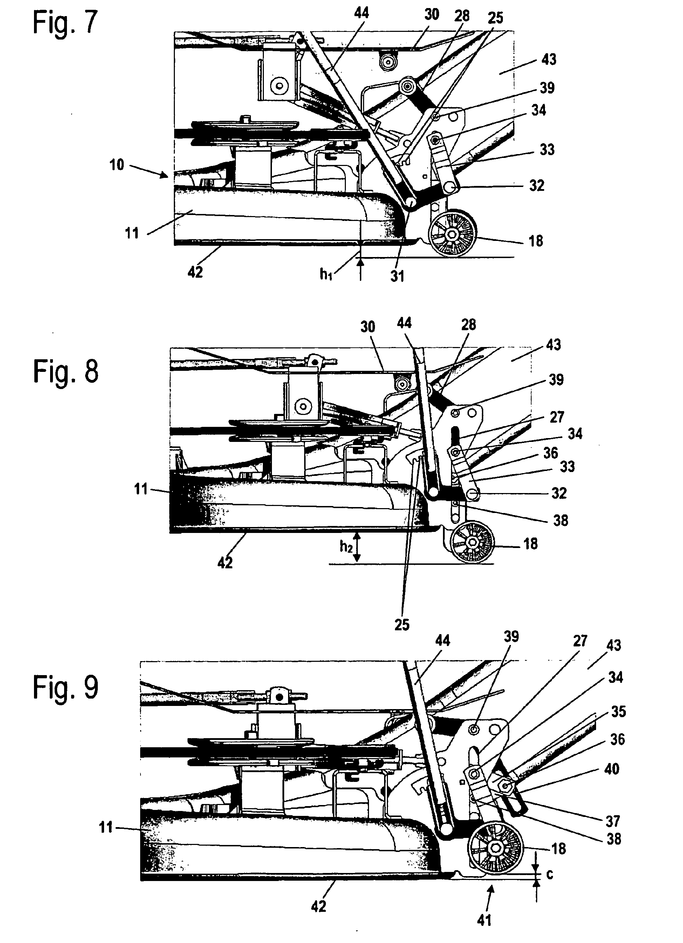

Die Fig. 7 bis 9 zeigen die konstruktive Gestaltung der Einstelleinrichtungen 14 und 15. In Fig. 7 ist der Bedienhebel 44 in der niedrigsten Schnitthöhe eingestellt. Die Konturfolgerolle 18 liegt in einem Abstand h₁ unterhalb des Rands 42 der Haube 11. Über das erste Gelenk 32, den ersten Koppelhebel 33, das zweite Gelenk 34 sowie die beiden in Fig. 7 nicht gezeigten Koppelhebel 35 und 37 ist die Position der Konturfolgerolle 18 festgelegt. Die Rasten 25 für die erste Einstelleinrichtung 14 sind benachbart zum Lager 31 des Bedienhebels 44 angeordnet.

In Fig. 8 ist eine zweite Schnitthöheneinstellung gezeigt, bei der die Konturfolgerolle 18 einen Abstand h₂ vom unteren Rand 42 der Haube 11 aufweist. Der Bedienhebel 44 ist in der Raste 25 für die höchste Schnitthöhe der ersten Einstelleinrichtung 14 angeordnet. Wie Fig. 8 zeigt, liegen das zweite Gelenk 34, das dritte Gelenk 36 und das vierte Gelenk 38 in einer Linie untereinander im Bereich der Führung 27. In den Fig. 7 und 8 ist auch der Führungskanal 43 gezeigt, der an der Haube 11 angeformt ist und der geschnittenes Mähgut zum Grasfangbehälter 9 befördert.

In Fig. 9 ist die Transportstellung 41 der Konturfolgerolle 18 gezeigt, in der die Konturfolgerolle 18 in einem Abstand c zum unteren Rand 42 und oberhalb des unteren Rands 42 der Haube 11 angeordnet ist. Wie Fig. 9 zeigt, besitzt der Betätigungshebel 28 ein Langloch 40, in dem das dritte Gelenk 36 geführt ist. In der in den Fig. 7 und 8 gezeigten Stellung des Betätigungshebels 28 ist das Langloch 40 hinter der Führung 27 deckungsgleich mit der Führung 27 angeordnet. In der in Fig. 9 gezeigten Stellung ist der Betätigungshebel 28 ausgeschwenkt, so dass der Abstand zwischen den Gelenken 34 und 38 verkürzt ist und die Könturfolgerolle 18 nach oben gezogen wurde.

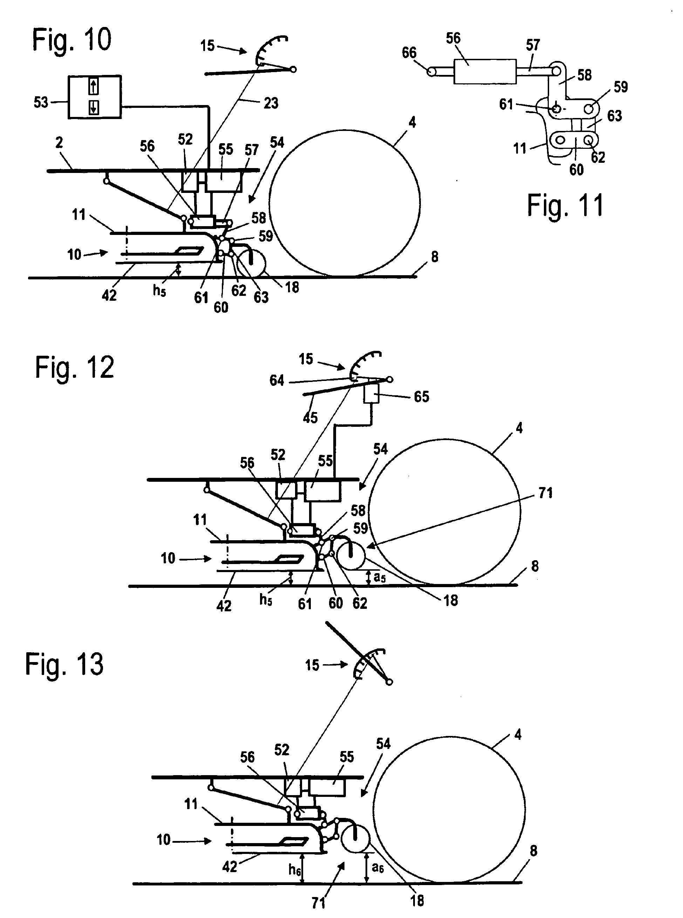

In den Fig. 10 bis 12 ist ein Ausführungsbeispiel einer ersten Einstelleinrichtung 54 gezeigt, die elektrisch betätigt ist. Die zweite Einstelleinrichtung 15 entspricht der in den Fig. 1 bis 6 gezeigten zweiten Einstelleinrichtung 15. Die erste Einstelleinrichtung 54 besitzt eine in Fig. 10 schematisch gezeigte Bedieneinrichtung 53, die Tasten für Aufwärtsfahren und Abwärtsfahren der Konturfolgerolle 18 aufweist. Anstatt der Tasten können auch andere Bedienmittel wie beispielsweise ein Touchscreen, eine Folientastatur, Schalter oder dgl. vorgesehen sein. Die Bedieneinrichtung 53 ist vorteilhaft im Bereich des Lenkrads 5 im Sichtfeld des Bedieners angeordnet. Die Bedieneinrichtung 53 ist mit einer Steuerung 55 verbunden. Die Steuerung 55 kann auch in die Bedieneinrichtung 53 integriert sein. Ferner ist noch eine Batterie 52 vorgesehen, die die Steuerung 55 und einen elektrisch betätigten Betätigungszylinder 56 mit Strom versorgt. Die Stromversorgung kann auch über den Antriebsmotor 7, beispielsweise über einen mit dem Antriebsmotor 7 verbundenen Generator, erfolgen. Der Betätigungszylinder 56 besitzt eine Betätigungsstange 57, die in den Betätigungszylinder 56 eingefahren oder aus diesem ausgefahren werden kann.

In Fig. 10 ist der ausgefahrene Zustand der Betätigungsstange 57 gezeigt. Die Betätigungsstange 57 ist über einen Koppelhebel 58 mit einem ersten Gelenk 59 verbunden, an dem die Konturfolgerolle 18 angeordnet ist. Der Koppelhebel 58 ist als Winkelhebel ausgebildet und um eine Schwenkachse 61 schwenkbar gelagert. Um zu gewährleisten, dass die Konturfolgerolle 18 im Wesentlichen senkrecht zum Boden 8 bewegt wird, ist ein Schwenkhebel 60 an der Haube 11 gelagert, der parallel zu einem Schenkel des Koppelhebels 58 verläuft. Dies ist in Fig. 11 vergrößert gezeigt. Am Gelenk 59 ist ein Verbindungshebel 63 gelagert, der mit einem am Schwenkhebel 60 angeordneten zweiten Gelenk 62 verbunden ist. Der untere Schenkel des Koppelhebels 58 bildet mit den Hebeln 60 und 63 ein Parallelogramm. Dadurch ist die Konturfolgerolle 18 etwa senkrecht zum Boden 8 geführt. Die Konturfolgerolle 18 kann anstatt am Gelenk 59 auch am Verbindungshebel 63 festgelegt sein. Damit die Betätigungsstange 57 der Schwenkbewegung des Koppelhebels 58 folgen kann, ist der Betätigungszylinder 57 an einem Gelenk 66 schwenkbar gelagert.

In Fig. 10 ist eine Schnitthöhe gezeigt, bei der die zweite Einstelleinrichtung 15 in der niedrigsten Einstellposition und die erste Einstelleinrichtung 54 in der höchsten Einstellposition ist. Der untere Rand 42 der Haube 11 besitzt zum Boden 8 in dieser Stellung einen Abstand h₅. Zur Verringerung der Schnitthöhe betätigt der Bediener die Bedieneinrichtung 53 so, dass die Steuerung 55 ein Einfahren der Betätigungsstange 57 in den Betätigungszylinder 56 veranlasst. Dadurch wird der Schwenkhebel 58 um die Schwenkachse 61 verschwenkt und die Gelenke 59 und 62 und mit ihnen die Konturfolgerolle 18 nach oben verschoben.

In Fig. 12 ist die Konturfolgerolle 18 in Transportstellung 71 gezeigt. In dieser Stellung befindet sich die Konturfolgerolle 18 in einem Abstand a₅ über dem Boden, der größer als der Abstand h₅ des unteren Rands 42 zum Boden 8 ist. Der Abstand a₅ kann auch etwa gleich groß wie der Abstand h₅ sein. Um die Schnitthöhe zu vergrößern, kann nun die zweite Einstelleinrichtung 15 betätigt werden. In der in Fig. 11 gezeigten Stellung ist die zweite Einstelleinrichtung 15 in einer Endstellung 64 angeordnet, der der niedrigsten mit der zweiten Einstelleinrichtung 15 einzustellenden Schnitthöhe entspricht. Der Aufsitzmäher besitzt einen Schalter 65, der mit der Steuerung 55 verbunden ist. Nur in der in Fig. 12 gezeigten Endstellung 64 ist der Schalter 65 betätigt. Nur bei betätigtem Schalter 65 kann die erste Einstelleinrichtung 54 betätigt werden. Sobald der Bediener den Bedienhebel 45 betätigt und die zweite Einstelleinrichtung 15 aus der Endstellung 64 bewegt, wird der Schalter 65 geöffnet und die Konturfolgerolle 18 wird automatisch und von der Steuerung 55 gesteuert in die Transportstellung 71 gebracht. Dadurch ist sichergestellt, dass bei Einstellung der Schnitthöhe über die zweite Einstelleinrichtung 15 die Konturfolgerolle 18 immer in Transportstellung 71 steht, so dass ein unbeabsichtigtes Beschädigen der Konturfolgerolle 18 beim Überfahren von Hindernissen vermieden ist.

Fig. 13 zeigt die zweite Einstelleinrichtung 15 in einer Einstellung für eine große Schnitthöhe. Der untere Rand 42 der Haube 11 besitzt zum Boden 8 einen Abstand h₆. Die Konturfolgerolle 18 befindet sich in Transportstellung 71 und besitzt zum Boden 8 einen Abstand a₆, der größer als der Abstand h₆ ist. Der Abstand a₆ kann dem Abstand h₆ auch etwa entsprechen.

Die elektrische Einstellung der Schnitthöhe über die erste Einstelleinrichtung 54 kann in vorgegebenen Stufen oder stufenlos erfolgen. Die Bedieneinrichtung 53 ist insbesondere eine Folientastatur oder ein Touchscreen. Die Bedieneinrichtung 53 kann auch durch Schalter, Tasten oder dgl. gebildet sein. Auch andere Bedienmittel können vorteilhaft sein. Vorteilhaft besitzt der Aufsitzmäher 1 eine Anzeigeeinrichtung, die anzeigt, wenn die Konturfolgerolle 18 in ihrer Transportstellung 71 angeordnet ist. Die Einstellung der Schnitthöhe erfolgt anhand der Zeit, die der Betätigungszylinder 56 betätigt ist. Diese Zeit wird von der Steuerung 55 gemessen und ausgewertet. Die Einstellung der Schnitthöhe kann jedoch auch über einen Positionsgeber wie beispielsweise ein Potentiometer erfolgen. Es kann vorteilhaft sein, die letzte eingestellte Schnitthöhe der ersten Einstelleinrichtung 54 in der Steuerung 55 zu speichern, wenn der Bedienhebel 45 die Endstellung 64 verlässt und beim erneuten Betätigen des Schalters 65, also wenn der Bedienhebel 45 wieder in die Endstellung 64 gebracht wird, automatisch die gespeicherte Schnitthöhe anzufahren. Es kann vorgesehen sein, dass die Speicherung der letzten angefahrenen Schnitthöhe nur bei eingeschalteter Zündung des Antriebsmotors 7 erfolgt. Die Speicherung kann jedoch auch bei unterbrochener Stromversorgung erfolgen und auch bei ausgeschaltetem Mähdeck 10. Die Energieversorgung der Steuerung 55 kann dabei über die Batterie 52 erfolgen.

Alle Abstände a, h, c und die Schnitthöhe s sind senkrecht zum Boden 8, bei ebenem Boden 8 also in Wirkrichtung der Schwerkraft gemessen.

## Patentansprüche

1. Aufsitzmäher, der sich über Räder (3, 4) auf dem Boden (8) abstützt, mit einem Antriebsmotor (7), der ein Mähwerk (10) und mindestens ein Rad (3, 4) des Aufsitzmähers (1) antreibt, wobei der Aufsitzmäher (1) einen Rahmen (2) besitzt, wobei der Aufsitzmäher (1) eine erste Einstelleinrichtung (14, 54) zur Einstellung der Schnitthöhe (s) aufweist, die eine mit dem Mähwerk (10) verstellbar verbundene Abstützung zum Boden aufweist und mit der die relative Lage der Abstützung zum Mähwerk (10) einstellbar ist, wobei die Abstützung zusammen mit dem Mähwerk (10) an dem Rahmen (2) zur Einstellung der Schnitthöhe (s) beweglich gelagert ist, und wobei die Abstützung eine Transportstellung (41, 71) besitzt, in der die Abstützung vollständig auf der dem Boden (8) abgewandten Seite des dem Boden (8) zugewandten unteren Rands (42) des Mähwerks (10) angeordnet ist,
**dadurch gekennzeichnet, dass** der Aufsitzmäher (1) eine zweite Einstelleinrichtung (15) zur Einstellung der Schnitthöhe (s) aufweist, mit der die Lage des Mähwerks (10) relativ zum Rahmen (2) des Aufsitzmähers (1) einstellbar ist und dass die Abstützung in Abhängigkeit der Stellung der zweiten Einstelleinrichtung (15) in die Transportstellung (41) überführt wird.

2. Aufsitzmäher nach Anspruch 1,
**dadurch gekennzeichnet, dass** das Mähwerk (10) mit dem Rahmen (2) über die zweite Einstelleinrichtung (15) nur in Wirkrichtung zum Anheben des Mähwerks (10) gekoppelt ist und dass das Absenken des Mähwerks (10) aufgrund der Schwerkraft erfolgt, wobei das Mähwerk (10) vorzugsweise mit dem Rahmen (2) über einen Bowdenzug (23), einen Seilzug oder eine in eine Richtung wirkende Stange gekoppelt ist.

3. Aufsitzmäher nach Anspruch 1 oder 2,
**dadurch gekennzeichnet, dass** die Abstützung eine Konturfolgerolle (18) ist, die sich über mindestens 50 %, insbesondere mehr als 80 % der Gesamtbreite (b) des Mähwerks (10) erstreckt und dass der Durchmesser (d) der Konturfolgerolle (18) weniger als 10 % der Länge (1) der Konturfolgerolle (18) entspricht, wobei vorzugsweise die Konturfolgerolle (18) eine geschlossene Umfangsfläche aufweist.

4. Aufsitzmäher nach einem der Ansprüche 1 bis 3,
**dadurch gekennzeichnet, dass** die erste Einstelleinrichtung (14) eine mechanische Einrichtung ist und insbesondere ein Hebelsystem zur Einstellung der Schnitthöhe (s) umfasst.

5. Aufsitzmäher nach Anspruch 4,
**dadurch gekennzeichnet, dass** das Hebelsystem einen Betätigungshebel (28) zur Einstellung der Transportstellung (41) aufweist, der unabhängig von der Schnitthöheneinstellung der ersten Einstelleinrichtung (14) betätigt werden kann.

6. Aufsitzmäher nach Anspruch 5,
**dadurch gekennzeichnet, dass** der Betätigungshebel (28) in einer konstruktiv vorgegebenen Position des Mähwerks (10) mit einer Betätigung (30) zusammenwirkt, die am Rahmen (2) des Aufsitzmähers (1) angeordnet ist und die die Abstützung in die Transportstellung (41) verstellt.

7. Aufsitzmäher nach einem der Ansprüche 1 bis 3,
**dadurch gekennzeichnet, dass** die erste Einstelleinrichtung (54) eine elektrischen Einrichtung ist und insbesondere einen elektrisch betätigten Zylinder (56) umfasst.

8. Aufsitzmäher nach Anspruch 7,
**dadurch gekennzeichnet, dass** die erste Einstelleinrichtung (54) eine Steuerung (55) umfasst, die die eingestellte Schnitthöhe (s) anhand der Verstellzeit des Zylinders (56) erfasst.

9. Aufsitzmäher nach Anspruch 7 oder 8,
**dadurch gekennzeichnet, dass** die erste Einstelleinrichtung (54) die eingestellte Schnitthöhe (s) über einen Positionsgeber erfasst.

10. Aufsitzmäher nach einem der Ansprüche 7 bis 9,
**dadurch gekennzeichnet, dass** die erste Einstelleinrichtung (54) nur in einer Endstellung (64) der zweiten Einstelleinrichtung (15) betätigt werden kann und dass die Abstützung in allen anderen Stellungen der zweiten Einstelleinrichtung (15) in Transportstellung (71) steht, wobei die zweite Einstelleinrichtung (15) in ihrer Endstellung (64) vorzugsweise einen Schalter (65) betätigt, der die erste Einstellrichtung (54) freigibt.

11. Aufsitzmäher nach einem der Ansprüche 1 bis 10,
**dadurch gekennzeichnet, dass** die Verstellung der Abstützung in die Transportstellung (54) elektrisch erfolgt.

12. Aufsitzmäher nach einem der Ansprüche 1 bis 11,
**dadurch gekennzeichnet, dass** die zweite Einstelleinrichtung (15) eine mechanische Einrichtung ist, wobei vorzugsweise das Mähwerk (10) an dem Rahmen (2) über mindestens ein Schwenklager (16, 17) schwenkbar gelagert ist, das insbesondere mindestens einen Hebel (24) umfasst, wobei die zweite Einstelleinrichtung (15) an dem Hebel (24) des Schwenklagers (17) angreift.

13. Aufsitzmäher nach einem der Ansprüche 1 bis 12,
**dadurch gekennzeichnet, dass** die zweite Einstellrichtung (15) Rasten (21) zur Einstellung der Schnitthöhe (s) in vorgegebenen Stufen aufweist.

14. Aufsitzmäher nach einem der Ansprüche 1 bis 13,
**dadurch gekennzeichnet, dass** die erste Einstelleinrichtung (14, 54) und die zweite Einstelleinrichtung (15) zur Einstellung von unterschiedlichen Schnitthöhen (s) vorgesehen sind, wobei insbesondere die erste Einstelleinrichtung (14, 54) zur Einstellung von Schnitthöhen (s) von etwa 30 mm bis etwa 60 mm ausgelegt ist und dass die zweite Einstelleinrichtung (15) zur Einstellung von Schnitthöhen (s) von etwa 30 mm bis zu einer maximalen Schnitthöhe ausgelegt ist.

## Claims

1. Ride-on mower supported on the ground (8) via wheels (3, 4), with a drive motor (7) driving a mowing mechanism (10) and at least one wheel (3, 4) of the ride-on mower (1), wherein the ride-on mower (1) has a frame (2), wherein the ride-on mower (1) comprises a first adjusting device (14, 54) for the adjustment of the cutting height (s), which is provided with a support against the ground which is adjustable together with the mowing mechanism (10) and by means of which the position of the support relative to the mowing mechanism (10) can be adjusted, wherein the support together with the mowing mechanism (10) is movably mounted on the frame (2) for the adjustment of the cutting height (s), and wherein the support has a transport position (41, 71) in which it is completely placed on that side of the lower edge (42) of the mowing mechanism (10) facing the ground (8) which is remote from the ground (8),
**characterised in that** the ride-on mower (1) comprises a second adjusting device (15) for the adjustment of the cutting height (s), by means of which the position of the mowing mechanism (10) relative to the frame (2) of the ride-on mower (1) can be adjusted, and **in that** the support is transferred into its transport position (41) in dependence on the position of the second adjusting device (15).

2. Ride-on mower according to claim 1,
**characterised in that** the mowing mechanism (10) is coupled to the frame (2) via the second adjusting device (15) only in the effective direction for raising the mowing mechanism (10), and **in that** the mowing mechanism (10) is lowered by the force of gravity, the mowing mechanism (10) being preferably coupled to the frame (2) via a control wire (23), a cable or a rod acting in one direction.

3. Ride-on mower according to claim 1 or 2,
**characterised in that** the support is a contour-following roller (18) extending across at least 50% and in particular across more then 80% of the overall width (b) of the mowing mechanism (10), and **in that** the diameter (d) of the contour-following roller (18) is less than the length (1) of the contour-following roller (18), the contour-following roller (18) preferably having a closed circumferential surface.

4. Ride-on mower according to any of claims 1 to 3,
**characterised in that** the first adjusting device (14) is a mechanical device and in particular comprises a lever system for the adjustment of the cutting height (s).

5. Ride-on mower according to claim 4,
**characterised in that** the lever system comprises an operating lever (28) for the transport position (41), which can be operated independently of the cutting height adjustment of the first adjusting device (14).

6. Ride-on mower according to claim 5,
**characterised in that** the operating lever (28) acts in a constructively preset position of the mowing mechanism (10) together with a control (30) which is located on the frame (2) of the ride-on mower (1) and moves the support into its transport position (41).

7. Ride-on mower according to any of claims 1 to 3,
**characterised in that** the first adjusting device (54) is an electric device and in particular comprises an electrically actuated cylinder (56).

8. Ride-on mower according to claim 7,
**characterised in that** the first adjusting device (54) comprises a control unit (55) which detects the set cutting height (s) with reference to the adjusting time of the cylinder (56).

9. Ride-on mower according to claim 7 or 8,
**characterised in that** the first adjusting device (54) detects the set cutting height (s) by way of a position sensor.

10. Ride-on mower according to any of claims 7 to 9,
**characterised in that that** the first adjusting device (54) can only be actuated in an end position (64) of the second adjusting device (15), and **in that** the support is in its transport position (71) in all other positions of the second adjusting device (15), wherein the second adjusting device (15) in its end position (64) preferably operates a switch (65) which enables the first adjusting device (54).

11. Ride-on mower according to any of claims 1 to 10,
**characterised in that** the support is moved into its transport position (54) electrically.

12. Ride-on mower according to any of claims 1 to 11,
**characterised in that** the second adjusting device (15) is a mechanical device, wherein the mowing mechanism (10) is preferably mounted pivotably on the frame (2) via at least one pivot bearing (16, 17) which in particular comprises at least one lever (24), the second adjusting device (15) acting on the lever (24) of the pivot bearing (17).

13. Ride-on mower according to any of claims 1 to 12,
**characterised in that** the second adjusting device (15) comprises detents (21) for the adjustment of the cutting height (s) in preset steps.

14. Ride-on mower according to any of claims 1 to 13,
**characterised in that** the first adjusting device (14, 54) and the second adjusting device (15) are provided for the adjustment of different cutting heights (s), wherein the first adjusting device (14, 54) is in particular designed for the adjustment of cutting heights (s) from approximately 30 mm to approximately 60 mm and the second adjusting device (15) is designed for the adjustment of cutting heights (s) from approximately 30 mm to a maximum cutting height.

## Revendications

1. Tondeuse autoportée qui s'appuie sur le sol (8) par l'intermédiaire de roues (3, 4), avec un moteur d'entraînement (7) qui entraîne un mécanisme de coupe (10) et au moins une roue (3, 4) de la tondeuse autoportée (1), étant précisé que ladite tondeuse (1) a un châssis (2), qu'elle comporte un premier dispositif de réglage (14, 54) pour régler la hauteur de coupe (s), qui comporte un support, par rapport au sol, relié de manière réglable au mécanisme de coupe (10), et grâce auquel la position relative du support par rapport au mécanisme de coupe (10) est réglable, que le support, avec le mécanisme de coupe (10), est monté mobile sur le châssis (2) en vue du réglage de la hauteur de coupe (s), et que le support a une position de transport (41, 71) dans laquelle il est disposé complètement sur le côté, opposé au sol (8), du bord inférieur (42) du mécanisme de coupe (10) tourné vers le sol (8), **caractérisée en ce que** la tondeuse autoportée (1) comporte un second dispositif de réglage (15) pour régler la hauteur de coupe (s), grâce auquel la position du mécanisme de coupe (10) par rapport au châssis (2) de la tondeuse (1) est réglable, et **en ce que** le support est amené dans la position de transport (41) en fonction de la position du second dispositif de réglage (15).

2. Tondeuse autoportée selon la revendication 1,
**caractérisée en ce que** le mécanisme de coupe (10) n'est accouplé au châssis (2) par l'intermédiaire du second dispositif de réglage (15) que dans le sens d'action pour soulever le mécanisme de coupe (10), et **en ce que** l'abaissement du mécanisme de coupe (10) se fait par gravité, le mécanisme de coupe (10) étant accouplé de préférence au châssis (2) par l'intermédiaire d'une commande Bowden (23), d'une commande par câble ou d'une tringle agissant dans un seul sens.

3. Tondeuse autoportée selon la revendication 1 ou 2,
**caractérisée en ce que** le support est constitué par un rouleau suiveur de contour (18) qui s'étend sur au moins 50%, en particulier sur plus de 80% de la largeur totale (b) du mécanisme de coupe (10), et **en ce que** le diamètre (d) du rouleau suiveur de contour (18) correspond à moins de 10% de sa longueur (1), ledit rouleau suiveur (18) présentant de préférence une surface circonférentielle fermée.

4. Tondeuse autoportée selon l'une des revendications 1 à 3,
**caractérisée en ce que** le premier dispositif de réglage (14) est constitué par un dispositif mécanique et comprend en particulier un système de leviers pour régler la hauteur de coupe (s).

5. Tondeuse autoportée selon la revendication 4,
**caractérisée en ce que** le système de leviers comporte un levier d'actionnement (28) pour régler la position de transport (41), qui peut être actionné indépendamment du réglage de la hauteur de coupe du premier dispositif de réglage (14).

6. Tondeuse autoportée selon la revendication 5,
**caractérisée en ce que** le levier d'actionnement (28), dans une position du mécanisme de coupe (10) prédéfinie par la construction, coopère avec un dispositif d'actionnement (30) qui est disposé sur le châssis (2) de la tondeuse (1) et qui amène le support dans la position de transport (41).

7. Tondeuse autoportée selon l'une des revendications 1 à 3,
**caractérisée en ce que** le premier dispositif de réglage (54) est constitué par un dispositif électrique et comprend en particulier un vérin (56) à actionnement électrique.

8. Tondeuse autoportée selon la revendication 7,
**caractérisée en ce que** le premier dispositif de réglage (54) comprend une commande (55) qui détecte grâce au temps de déplacement du vérin (56) la hauteur de coupe (s) réglée.

9. Tondeuse autoportée selon la revendication 7 ou 8,
**caractérisée en ce que** le premier dispositif de réglage (54) détecte par l'intermédiaire d'un capteur de position la hauteur de coupe (s) réglée.

10. Tondeuse autoportée selon la revendication 7 à 9,
**caractérisée en ce que** le premier dispositif de réglage (54) ne peut être actionné que dans une position de fin de course (64) du second dispositif de réglage (15) et **en ce que** le support, dans toutes les autres positions du second dispositif de réglage (15), est en position de transport (71), le second dispositif de réglage (15) actionnant de préférence, dans sa position de fin de course (64), un commutateur (65) qui débloque le premier dispositif de réglage (54).

11. Tondeuse autoportée selon l'une des revendications 1 à 10,
**caractérisée en ce que** l'amenée du support dans la position de transport (54) se fait par voie électrique.

12. Tondeuse autoportée selon l'une des revendications 1 à 11,
**caractérisée en ce que** le second dispositif de réglage (15) est constitué par un dispositif mécanique, le mécanisme de coupe (10) étant de préférence monté pivotant sur le châssis (2) par l'intermédiaire d'au moins un montage pivotant (16, 17) qui comprend en particulier au moins un levier (24), le second dispositif de réglage (15) agissant sur le levier (24) du palier (17).

13. Tondeuse autoportée selon l'une des revendications 1 à 12,
**caractérisée en ce que** le second dispositif de réglage (15) présente des crans (21) pour le réglage de la hauteur de coupe (s) par degrés prédéfinis.

14. Tondeuse autoportée selon l'une des revendications 1 à 13,
**caractérisée en ce que** le premier dispositif de réglage (14, 54) et le second dispositif de réglage (15) sont destinés à régler différentes hauteurs de coupe (s), étant précisé notamment que le premier dispositif de réglage (14, 54) est conçu pour le réglage de hauteurs de coupe (s) d'environ 30 mm à environ 60 mm, et **en ce que** le second dispositif de réglage (15) est conçu pour le réglage de hauteurs de coupe (s) d'environ 30 mm à une hauteur de coupe maximale.
